# EUROPEAN PATENT SPECIFICATION

(11) **EP 4 467 436 B1**
(45) Date of publication and mention of the grant of the patent: **06.05.2026**
(21) Application number: 24150628.6
(22) Date of filing: 08.01.2024
(51) Int. Cl.: F16H 3/72, B62M 6/55, B62M 11/14, B62M 11/18

(54) **CONTINUOUSLY VARIABLE TRANSMISSION FOR BICYCLE**
STUFENLOSES GETRIEBE FÜR FAHRRAD
TRANSMISSION À VARIATION CONTINUE POUR BICYCLETTE

(30) Priority: 28.11.2023 KR 20230168351
(43) Date of publication of application: 27.11.2024
(73) Proprietor: Korea Mobility Co., Ltd., Gwangju 61011 (KR)
(72) Inventor: PARK, Jeong Seok, 61019 Gwangju (KR); YAN, ZENHUA, Tianjin (CN)
(74) Representative: Danubia Patent & Law Office LLC

(56) References cited:
- DE-A1- 102016 225 168
- JP-A- 2016 182 851
- US-A1- 2017 219 066

## Description

### BACKGROUND OF THE INVENTION

### 1. Field of the Invention

The present invention relates to a continuously variable transmission for a bicycle, and more particularly, to a continuously variable transmission for a bicycle, which is capable of automatically shifting gears steplessly in response to changes in driving power and loads according to traveling environments without a user's manipulation, charging the bicycle with power, which is generated when the bicycle travels or shifts, by an electric generator, preventing a reverse rotation of a central shaft, and enabling the user to manually adjust the gear shifting by using a load providing part as necessary.

### 2. Description of the Related Art

In general, a transmission installed on a bicycle is equipped with multi-stage chain gears having various diameters and respectively mounted on a pedal shaft and a rear wheel shaft. The transmission is configured to shift gears by operating the multi-stage chain gears so that a chain engages with the chain gear with a desired stage.

JP 2016 182851 describes a continuously variable transmission for a bicycle which is defined in the preamble of claim 1.

However, the transmission using the multi-stage chain gears has a problem in that noise and vibration occur at the time of changing the chain gears for gear shifting, a breakdown rate is high because of frequent withdrawal of the chain, and manufacturing costs are increased. In particular, there is a problem in that stepless gear shifting cannot be performed basically, the user needs to manipulate a gear shift lever to shift gears while driving the bicycle, which increases a risk of a safety accident.

In order to solve the problems with the transmission equipped with the multi-stage chain gears, various technologies related to continuously variable transmissions have been proposed.

As disclosed in Korean Patent Application Laid-Open No. 10-2012-0080371, the related art, which performs the above-mentioned functions, includes: a shaft rotatably assembled to a boss of a bicycle, having first and second pedal cranks assembled to two opposite sides thereof, and having a first gear disposed at one side of an outer-diameter portion thereof; a one-way unit fastened to and disposed on the boss, having an inner ring for preventing a reverse rotation of an outer ring, and having a second gear provided on an outer-diameter portion of the outer ring; a carrier unit rotatably disposed in an idle state on the shaft and having a third gear installed at one side thereof so as to engage with the first gear, a fourth gear disposed at the other side thereof so as to engage with the third gear, and a fifth gear provided at one side of the fourth gear, integrated with the fourth gear, and configured to engage with the second gear; a drive wheel unit rotatably disposed in an idle state on the shaft and having a sixth gear disposed at one side of a cylinder body and configured to internally engage with the fifth gear, and a seventh gear provided at one side of an outer diameter portion of the cylinder body and connected to a power transmission unit configured to transmit power to a rear wheel of the bicycle; and a control unit installed at one side of the carrier unit and configured to allow the drive wheel unit to control a rotation of the carrier unit in proportion to a traveling resistance force applied to the drive wheel unit.

However, the technical configuration in the related art has the following problems.

The technology may perform the stepless gear shifting, and the structure of the technology may only perform automatic gear shifting by means of a transmission mechanism, but the structure of the technology cannot perform manual gear shifting.

In addition, there is a problem in that the technology has low efficiency because only a user's power is outputted through the transmission mechanism.

### SUMMARY OF THE INVENTION

The present invention has been made in an effort to solve the above-mentioned problems in the related art, and an object of the present invention is to automatically shift gears steplessly in response to changes in driving power and loads according to traveling environments without a user's manipulation, charge the bicycle with power, which is generated when the bicycle travels or shifts, by an electric generator, prevent a reverse rotation of a central shaft, and enable the user to manually adjust the gear shifting by using a load providing part as necessary.

Another object of the present invention is to output both power of a user and power of a motor through a transmission mechanism.

The objects have been solved by providing a continuously variable transmission for a bicycle the is designed as included in the attached claims.

### BRIEF DESCRIPTION OF THE DRAWINGS

FIG. 1 is a coupled perspective view illustrating a continuously variable transmission for a bicycle of the present invention.
FIG. 2 is a cross-sectional view illustrating the continuously variable transmission for a bicycle of the present invention.
FIG. 3 is an exploded perspective view illustrating a disassembled body part of the continuously variable transmission for a bicycle of the present invention.
FIG. 4 is a coupled perspective view illustrating a shifting part and a load providing part of the continuously variable transmission for a bicycle of the present invention.
FIG. 5 is an exploded perspective view illustrating a disassembled central shaft of the continuously variable transmission for a bicycle of the present invention.
FIG. 6A is an exploded perspective view illustrating the shifting part and the load providing part of continuously variable transmission for a bicycle of the present invention when viewed from the right side.
FIG. 6B is an exploded perspective view illustrating the shifting part and the load providing part of the continuously variable transmission for a bicycle of the present invention when viewed from the left side.
FIG. 7 is an exploded cross-sectional perspective view illustrating the shifting part and the load providing part of the continuously variable transmission for a bicycle of the present invention when viewed from the right side.
FIG. 8 is a partially enlarged view of FIG. 7.
FIG. 9 is an exploded cross-sectional perspective view illustrating the shifting part and the load providing part of the continuously variable transmission for a bicycle of the present invention when viewed from the left side.
FIG. 10 is a partially enlarged view of FIG. 9.
FIG. 11 is an exploded perspective view illustrating a state in which a torque sensor and a first carrier of the continuously variable transmission for a bicycle of the present invention are connected.
FIG. 12 is a schematic view illustrating a principle of the continuously variable transmission for a bicycle of the present invention.

### DETAILED DESCRIPTION OF THE PREFERRED EMBODIMENT

Hereinafter, the present invention will be described in detail with reference to the accompanying drawings. First, it should be noted that like reference numerals indicate like constituent elements or components in the drawings wherever possible. In the description of the present invention, the specific descriptions of related well-known functions or configurations will be omitted in order not to obscure the subject matter of the present invention.

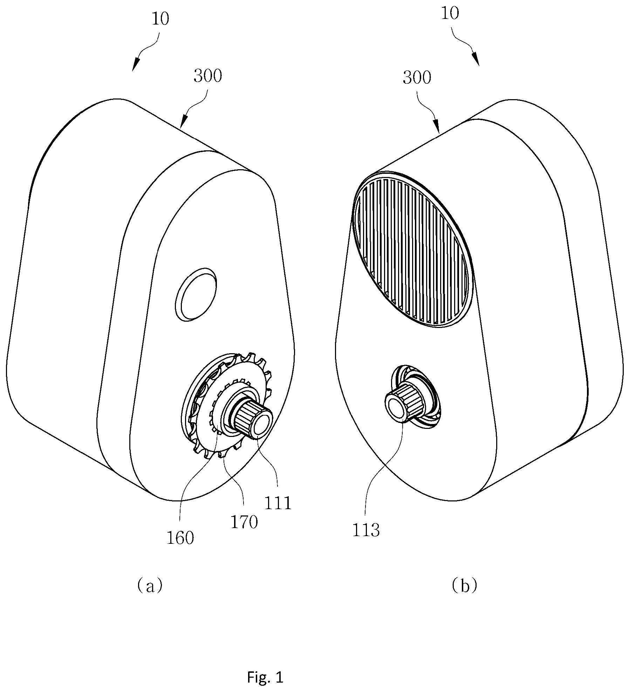

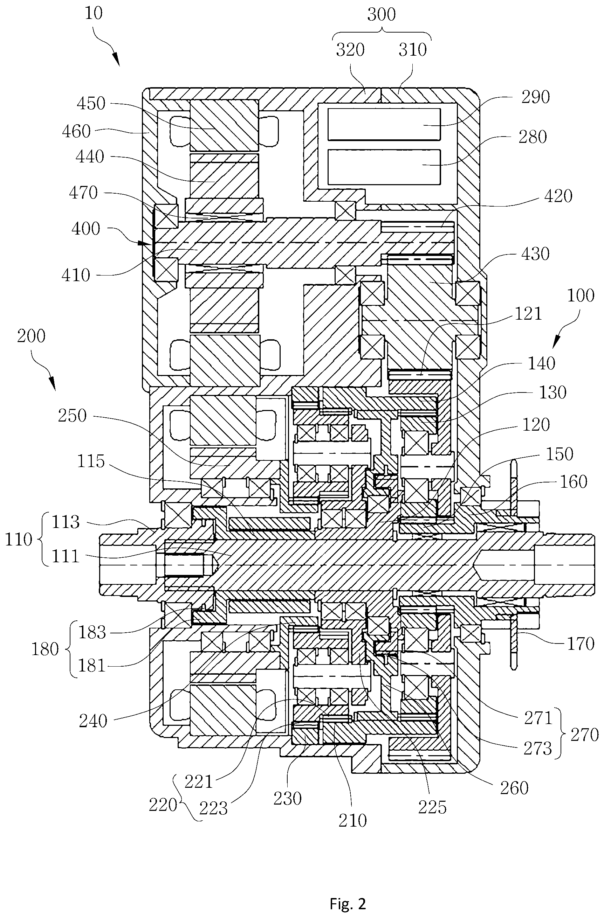

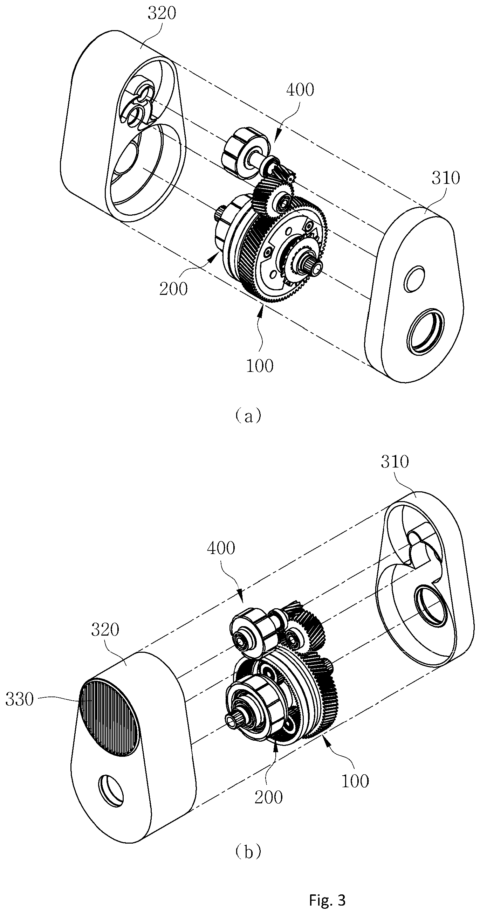

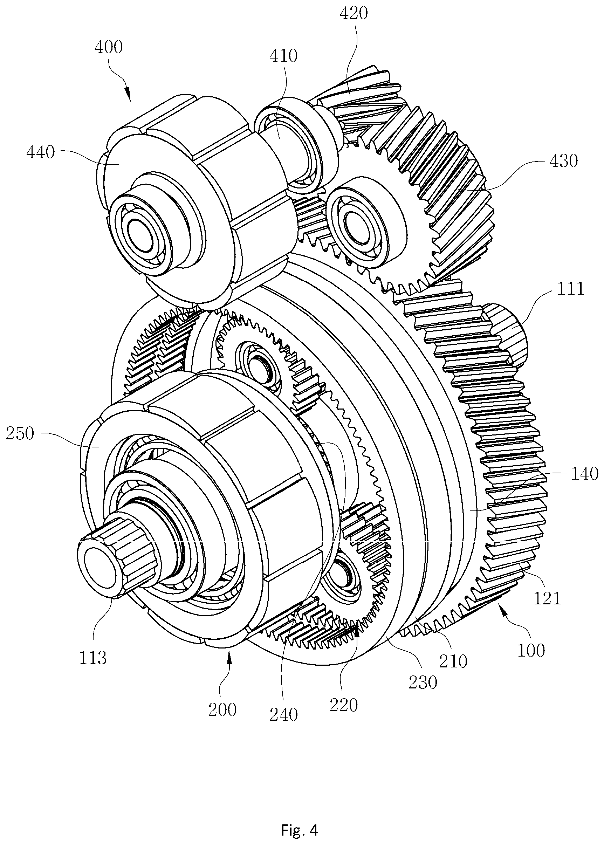

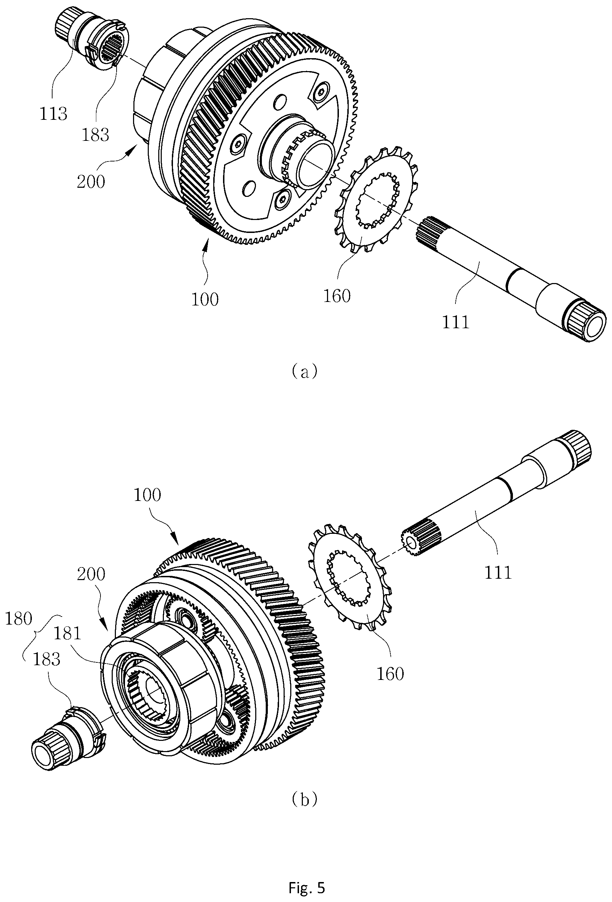

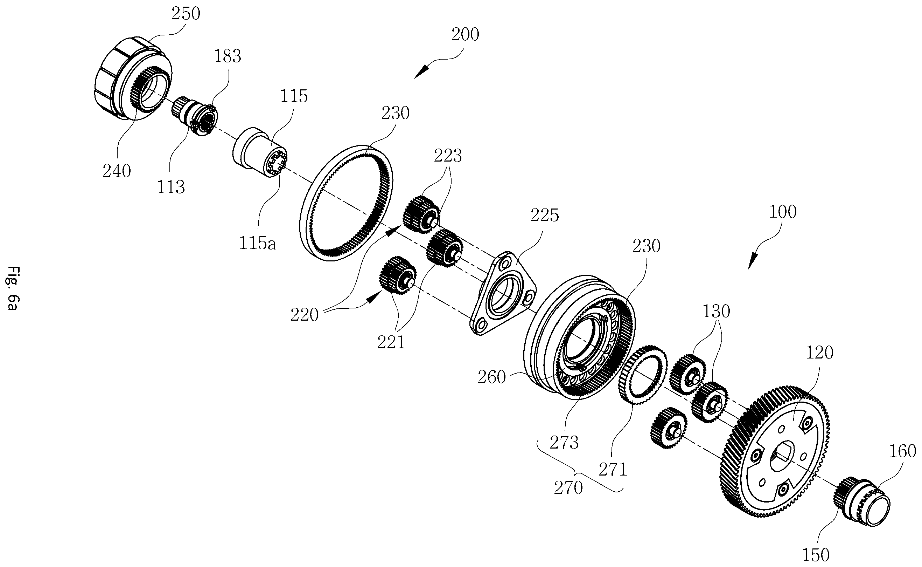

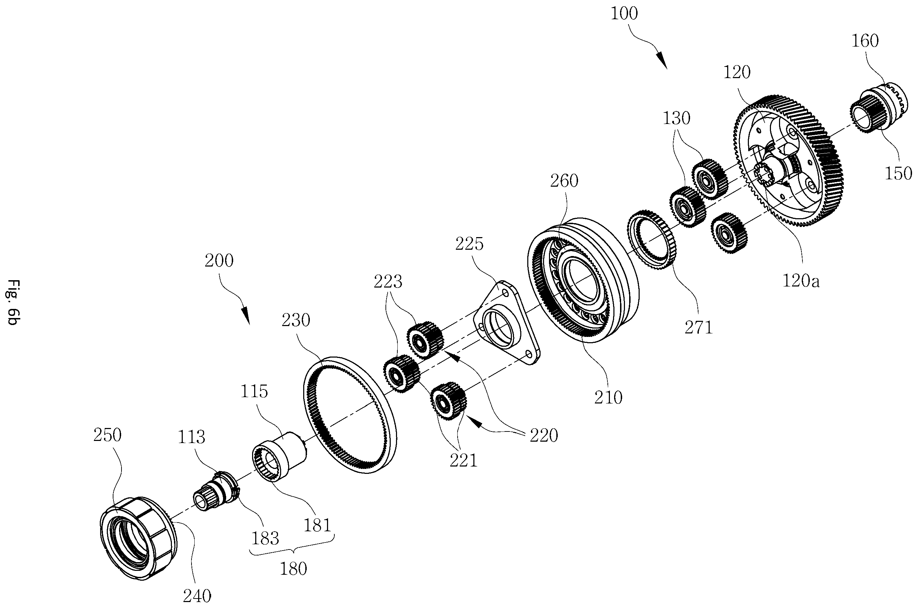

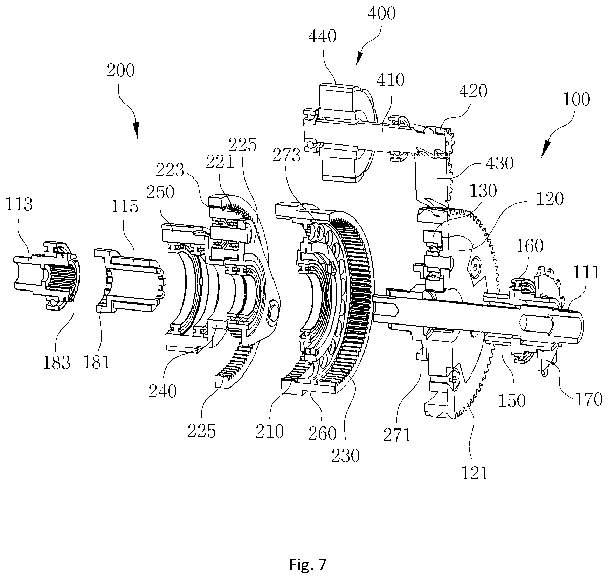

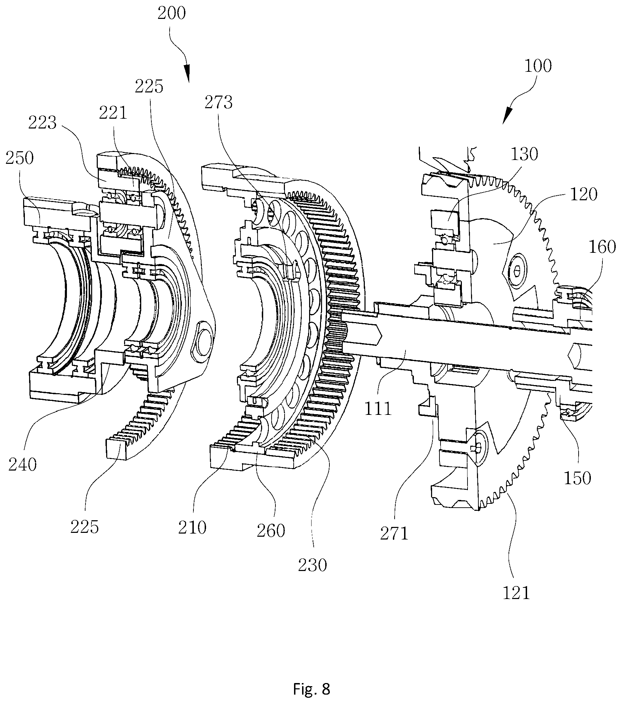

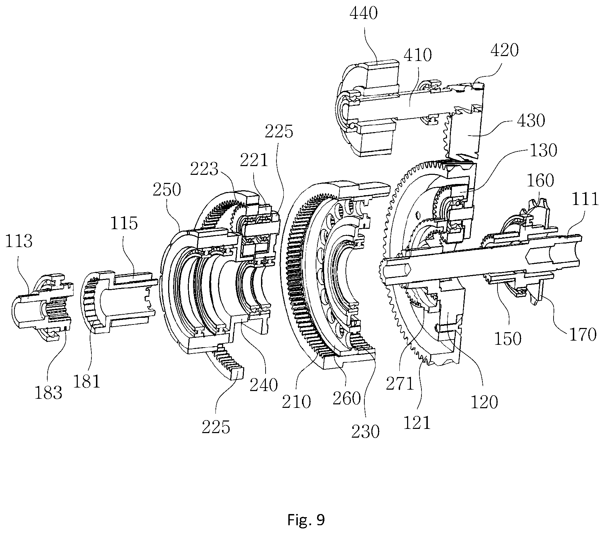

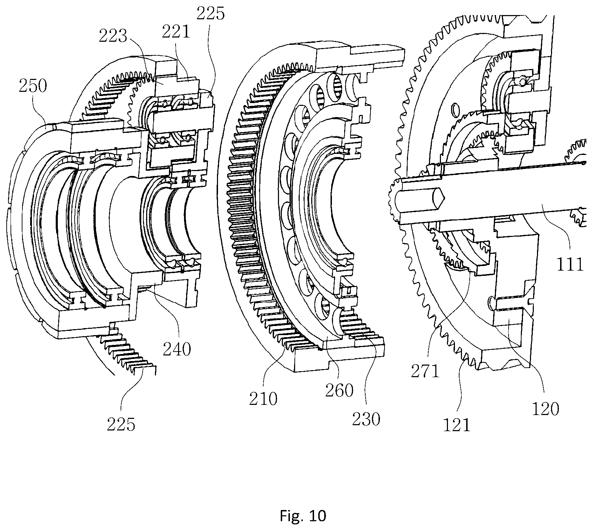

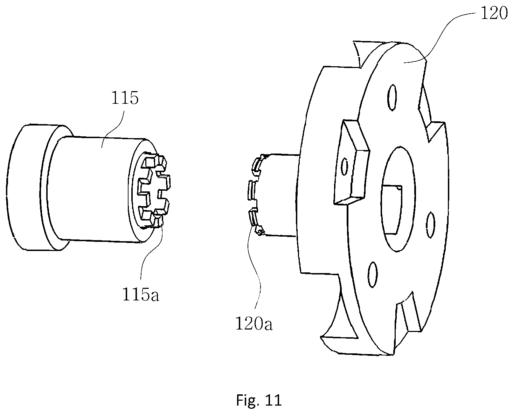

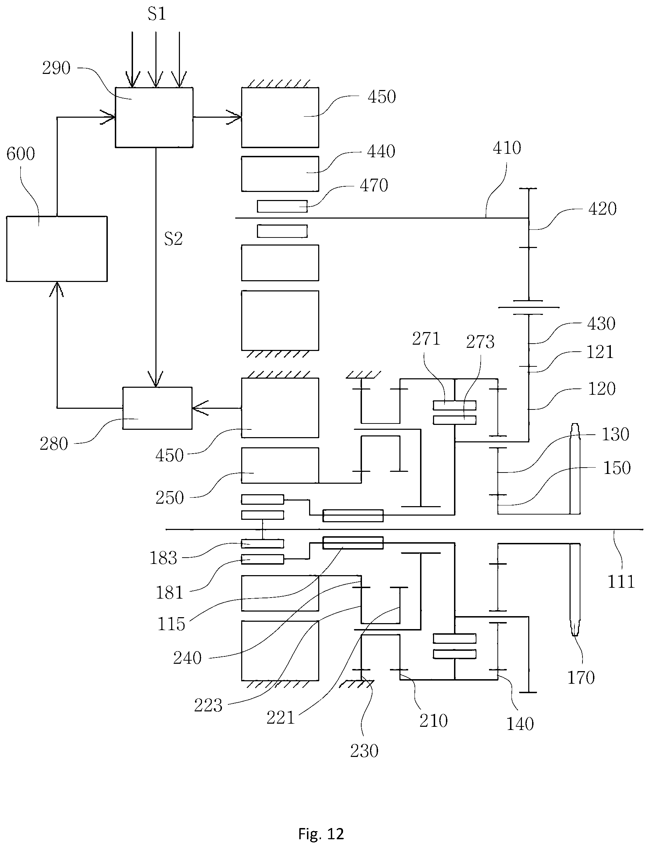

FIG. 1 is a coupled perspective view illustrating a continuously variable transmission for a bicycle of the present invention, FIG. 2 is a cross-sectional view illustrating the continuously variable transmission for a bicycle of the present invention, FIG. 3 is an exploded perspective view illustrating a disassembled body part of the continuously variable transmission for a bicycle of the present invention, FIG. 4 is a coupled perspective view illustrating a shifting part and a load providing part of the continuously variable transmission for a bicycle of the present invention, FIG. 5 is an exploded perspective view illustrating a disassembled central shaft of the continuously variable transmission for a bicycle of the present invention, FIG. 6A is an exploded perspective view illustrating the shifting part and the load providing part of continuously variable transmission for a bicycle of the present invention when viewed from the right side, FIG. 6B is an exploded perspective view illustrating the shifting part and the load providing part of the continuously variable transmission for a bicycle of the present invention when viewed from the left side, FIG. 7 is an exploded cross-sectional perspective view illustrating the shifting part and the load providing part of the continuously variable transmission for a bicycle of the present invention when viewed from the right side, FIG. 8 is a partially enlarged view of FIG. 7, FIG. 9 is an exploded cross-sectional perspective view illustrating the shifting part and the load providing part of the continuously variable transmission for a bicycle of the present invention when viewed from the left side, FIG. 10 is a partially enlarged view of FIG. 9, FIG. 11 is an exploded perspective view illustrating a state in which a torque sensor and a first carrier of the continuously variable transmission for a bicycle of the present invention are connected, and FIG. 12 is a schematic view illustrating a principle of the continuously variable transmission for a bicycle of the present invention.

First, a configuration of a continuously variable transmission 10 for a bicycle according to the present invention will be described. The continuously variable transmission 10 for a bicycle includes a shifting part 100, a load providing part 200, a body part 300, and a motor part 400.

In this case, when a user presses pedals (not illustrated) coupled to a central shaft 110, the shifting part 100 operates and rotates the central shaft 110. In this case, the shifting part receives a rotational force of the central shaft 110 sequentially through a torque sensor 115, a first carrier 120, first planet gears 130, a first ring gear 140, a first sun gear 150, and an output shaft 160 and transmits the rotational force to the output shaft 160 while automatically shifting gears in accordance with resistance during the rotation.

In this manner, power transmitted to the output shaft 160 is transmitted to a wheel (not illustrated) through a chain wheel 170 installed on the output shaft 160.

The central shaft 110 includes a first central shaft 111 and a second central shaft 113 coupled to operate in conjunction with each other. The first central shaft 111 and the second central shaft 113 are connected by means of a spline.

In addition, the shifting part 100 is configured such that the first carrier 120, the first planet gears 130, the first ring gear 140, the first sun gear 150, and the output shaft 160 are coupled to operate in conjunction with one another.

In this case, the central shaft 110 is connected to the first carrier 120, the plurality of first planet gears 130 is installed on the first carrier 120, the first planet gears 130 engage with an inner portion of the first ring gear 140 and engage with an outer portion of the first sun gear 150, and the output shaft 160 is integrally installed at one side of the first sun gear 150.

Further, the central shaft 110 is connected to the torque sensor 115 through a first clutch 180, and the torque sensor 115 is connected to the first carrier 120. The torque sensor 115 detects a rotational speed of the central shaft 110.

Further, the torque sensor 115 and the first carrier 120 are connected by a plurality of rectangular catching means 115a and 120a formed to correspond to each other. In particular, the second catching means 115a formed on the torque sensor 115 and the catching means 120a formed on the first carrier 120 engage with each other and operate in conjunction with each other.

Further, the first clutch 180 has a first latch gear 181 provided outside the central shaft 110 and inclined in one direction. A first latch 183, which is rotatably installed on an inner surface of the torque sensor 115, is selectively caught by the first latch gear 181, such that the power of the central shaft 110 is transmitted only in one direction.

That is, the power is transmitted to the output shaft 160 when the central shaft 110 rotates. However, when the rotation of the central shaft 110 is stopped, the power is not transmitted to the torque sensor 115, and the output shaft 160 idles.

Further, a support frame 260 is integrally installed at an inner peripheral edge of the first ring gear 140, and a second ring gear 210 is integrally provided at a position spaced apart from the first ring gear 140.

In addition, the load providing part 200 is installed to operate in conjunction with the shifting part 100 and selectively provides a load to the shifting part 100.

In this case, the load providing part 200 generates electric power while rotating by receiving a rotational force of the second ring gear 210, which rotates integrally with the first ring gear 140, through dual planet gears 220, a third ring gear 230, a second sun gear 240, and an generator rotor 250. When a charging load of the generator rotor 250 is increased, a load is provided in the reverse order.

Further, the support frame 260 is installed integrally with the first ring gear 140, and the support frame 260 operates in one direction in conjunction with the first carrier 120 through a second clutch 270.

The second clutch 270 has a second latch gear 271 installed on the first carrier 120. A second latch 273, which is rotatably installed on an inner surface of the support frame 260, is selectively caught by the second latch gear 271 to selectively rotate the first carrier 120.

Further, the dual planet gear 220 includes a second planet gear 221 and a third planet gear 223 installed on a single shaft. In this case, the second planet gear 221 engages with an inner portion of the second ring gear 210, and the third planet gear 223 engages with an inner portion of the third ring gear 230 and an outer portion of the second sun gear 240. In this case, the third ring gear 230 is fixedly installed on the body part 300.

The plurality of second planet gears 221 and the plurality of third planet gears 223 are installed on a second carrier 225.

In addition, the second sun gear 240 engages with an outer portion of the generator rotor 250.

As a result, according to the continuously variable transmission 10 for a bicycle according to the embodiment of the present invention, the stepless gear shifting may be automatically performed in response to changes in driving power and loads according to traveling environments without the user's manipulation. The bicycle is charged with power, which is generated when the bicycle travels and shifts, by the electric generator, and the user operates and rotates the central shaft 110. The continuously variable transmission 10 for a bicycle includes the shifting part 100 configured to transmit the rotational force of the central shaft 110 to the output shaft 160 while automatically shifting gears in accordance with resistance when rotating by receiving the rotational force of the central shaft 110 sequentially through the torque sensor 120, the first carrier 120, the first planet gears 130, the first ring gear 140, the first sun gear 150, and the output shaft 160, and the load providing part 200 installed to operate in conjunction with the shifting part 100 and configured to selectively provide a load to the shifting part 100. Therefore, the continuously variable transmission 10 may easily adjust the gears in accordance with the traveling environment.

Meanwhile, the continuously variable transmission may further include the motor part 400 installed to operate in conjunction with the shifting part 100 and configured to provide power to the shifting part 100.

In this case, a motor input gear 121 is formed at an outer peripheral edge of the first carrier 120. The motor input gear 121 engages with a transition gear 430 and a motor output gear 420 formed at an end of a motor output shaft 410.

In this case, a motor rotor 440 is connected to the motor output gear 420 through a third clutch 470 that operates only in one direction, and a motor stator 450 is positioned outside the motor rotor 460. In this case, the power of the motor part 400 is supplied to the first carrier 120 by the third clutch 470. When the first carrier 120 rotates the transition gear 430, the motor rotor 440 idles.

As a result, the continuously variable transmission 10 for a bicycle of the present invention further includes the motor part 400 installed to operate in conjunction with the shifting part 100 and configured to provide the power to the shifting part 100 so that both the power of the user and the power of the motor may be outputted through the transmission mechanism, thereby improving traveling efficiency and traveling comfort.

Meanwhile, the body part 300 is divided into a first body part 310 and a second body part 320. A motor cover 330 is coupled to one side of the second body part 320.

The body part 300 accommodates the shifting part 100, the load providing part 200, and the motor part 400. Further, bearings (no reference numerals) are installed on components such as the rotating shafts and gears. The bearing is installed on the body part 300 to reduce a frictional force. In the following further properties will be shown which do not form part of the present invention.

Meanwhile, the continuously variable transmission 10 for a bicycle also includes a controller 290 and a load control part 280. During a riding process, traveling status signals S1 including a wheel rotation speed signal, a pedaling torque signal, a cadence frequency, a rotational speed of the motor, a rotational speed of the load providing part, and other signals are collected. The controller 290 sends a corresponding charging load signal S2 to the load control part 280 in response to the traveling status signal S1 and serves to adjusts an increase rate of a speed of the output shaft 160 by controlling a speed of the first ring gear 140 by adjusting the charging load.

Further, a battery 600 is charged with electricity produced by the load providing part 200 during a gear shifting process, and thus the electricity is reused, thereby maximizing efficiency.

Meanwhile, the central shaft 110 is connected to the first carrier 120, the plurality of first planet gears 130 is installed on the first carrier 120, the first planet gears 130 engage with the inner portion of the first ring gear 140 and the outer portion of the first sun gear 150, the second planet gears 221 among the dual planet gears 220 made by integrally coupling the second planet gears 221 and the third planet gears 223 engage with the second ring gear 210 integrally formed at the position spaced apart from the first ring gear 140, the third planet gears 223 engage with the inner portion of the third ring gear 230 and the outer portion of the second sun gear 240, and the second sun gear 240 engages with an outer portion of the generator rotor 250.

In this case, the number of teeth Zg of the first sun gear 150 may be 28 to 32, the number of teeth Zf of the first ring gear 140 may be 98 to 106, the number of teeth Zh of the first planet gear 130 may be 34 to 386, the number of teeth Zb of the third ring gear 230 (the second ring gear 210) may be 102 to 113, the number of teeth Za of the second sun gear may be 40 to 46, the number of teeth Zc of the third planet gear 223 (left dual gear) may be 30 to 34, the number of teeth Zd of the second planet gear 221 (right dual gear) may be 26 to 30, and the number of teeth Ze of the second ring gear 210 (the third ring gear 230) may be 99 to 107.

An operation of the continuously variable transmission 10 for a bicycle according to the presented information will be described below.

First, power of a rider and power of the motor part 400 are merged on the first carrier 120 and then outputted to the first sun gear 150. With the basic characteristics of the planet gear system, when a rotational speed of the first ring gear 140 is changed in a state in which a rotational speed of a planetary carrier is not changed, a rotational speed of the first sun gear 150 is also changed.

In addition, when power is inputted to the first carrier 120, both the first planet gears 130 and the first carrier 120 tend to rotate in the rotation direction of the first carrier 120, and a specific rotational speed of the first sun gear 150 and a specific rotational speed of the first ring gear 140 are determined depending on a magnitude of rotational resistance of the first ring gear 140.

In this case, the first ring gear 140 rotates slowly when the rotational resistance of the first ring gear 140 is large, and the first ring gear 140 rotates quickly when the rotational resistance of the first ring gear 140 is small. The rotational resistance of the first ring gear 140 is implemented by controlling the rotational resistance of the generator rotor 250 by means of the load control part 280 that controls the charging load of the load providing part 200.

That is, under a condition in which power inputted to the first carrier 120 is constant, the rotational speed of the rotor of the load providing part 200 varies depending on the resistance of the generator rotor 250. The rotational speed of the rotor of the load providing part 200 decreases when the resistance is large, and the rotational speed of the rotor of the load providing part 200 increases when the resistance is small.

In particular, the rotational speed of the generator rotor 250 is controlled by controlling the magnitude of the charging load, and the rotational speed of the first sun gear 150 is changed by controlling the speed of the second ring gear 210 and the speed of the first ring gear 140 under the condition in which the rotational speed of the first carrier 120 is not changed. That is, a gear shifting output is implemented.

In general, there are three types of riding conditions including an upward slope, a flat ground, and a downward slope. The bicycle rider may always ride at the most comfortable cadence (a comfortable rotational speed made by pressing the pedals is generally about 60 rpm) regardless of road conditions.

The present system adjusts an output speed increase rate of the chain wheel 170 on the basis of a particular road condition. When the rider presses the pedals at a constant cadence, the chain wheel 170 outputs an unchanged rotational speed in accordance with an unchanged road condition, such that the rider rides more comfortably, and the auxiliary motor also operates in a high-efficiency region.

In particular, the third ring gear 230 is fixed to the second body part 320, and the third ring gear 230 and the second ring gear 210 simultaneously engage with the dual planet gears 220, such that the generator rotor 250 may stop the second ring gear 210 with a lower force, and the gear shifting process may be stably controlled by the load control part 280.

A relationship between the cadence of the rider and the speed of the device of the present teaching under various riding environments will be additionally described.

Three types of situations including a high-speed situation, a low-speed situation, and a middle-speed situation are distinguished and described.
1) When high-speed riding is required, the second ring gear 210 is stopped by increasing the charging load. That is, the second ring gear 210 is in a stopped state, the power is inputted to the first carrier 120 and outputted from the first sun gear 150. When the rotational speed of the first carrier 120 is n the planetary carrier and the rotational speed of the first sun gear 150 is n the first sun gear 150, the speed increase rate from the first carrier 120 to the first sun gear 150 is i first sun gear = n first sun gear/n first carrier = 1 + Zf/Zg. Here, Zf represents the number of teeth of the first ring gear 140, and Zg represents the number of teeth of the first sun gear 150. In this case, the speed is increased and outputted.
2) When low-speed riding is required, the second ring gear 210 may be rotated at the highest speed by idling the generator rotor 250 by reducing the charging load. However, the second ring gear 210 is fixedly connected to the second clutch 270, and the other end of the second clutch 270 is fixedly connected to the first carrier 120, such that the rotational speed of the second ring gear 210 is restricted by the second clutch 270. A maximum rotational speed of the second ring gear 210 cannot exceed the rotational speed of the first carrier 120, and the second ring gear 210 may be rotated maximally by being synchronized. In this case, the rotational speed of the first sun gear 150 is equal to the rotational speed of the first carrier 120, and the speed increase rate is i first sun gear = n first sun gear/n first carrier = 1. This is the case of the low-speed output.

A gear shift ratio of a gear shifting structure of the dual planet gears 220 will be described below. Because the second ring gear 210 and the first ring gear 140 are the common body, the second ring gear 210 operates and rotates the dual planet gears 220, and the dual planet gears 220 operate the second sun gear 240 and the generator rotor 250. When the rotational speed of the second ring gear 210 is n second ring gear and the rotational speed of the second sun gear 240 is n second sun gear, the speed increase rate from the second ring gear 210 to the second sun gear 240 is as follows. i generator rotor = n second sun gear/n second ring gear = (1 + Zb/Za)/(1 - ZbZd/ZcZe). Here, Zb represents the number of teeth of the third ring gear 230 that is 107 in the present embodiment, Za represents the number of teeth of the second sun gear 240 that is 43 in the present embodiment, Zc represents the number of teeth of the second planet gears 221 that is 32 in the present embodiment, Zd represents the number of teeth of the third planet gears 223 that is 28 in the present embodiment, Ze represents the number of teeth of the second ring gear 210 that is 103 in the present embodiment, and the generator rotor 250 rotates at a speed of i generator rotor times the rotational speed of the second ring gear 210. Because the specific number of teeth is common design knowledge to those skilled in the art, a detailed description thereof will be omitted. In this case, the charging load is 0, and the generator rotor 250 is in an idling state.

3) In case that the riding is performed between the high speed and the low speed, the charging load is adjusted between the two types of extreme conditions 1) and 2), such that the generator rotor 250 operates at the rotational speed between the stopped state and the idling state. When the generator rotor 250 is controlled in the stopped state, the second ring gear 210 is stopped, i.e., the second ring gear 210 is stopped, and the high-speed output is implemented. When the generator rotor 250 is controlled in the idling state, the second ring gear 210 rotates at the maximum rotational speed and thus rotates at the same speed as the first carrier 120. In this case, the rotational speed of the first sun gear 150 and the rotational speed of the first carrier 120 are equal to each other, and the low-speed output is implemented. When the generator rotor 250 is adjusted between the two types of states, the speed increase rate is also between 1 + Zf/Zg and 1. Zf represents the number of teeth of the first ring gear 140, and Zg represents the number of teeth of the first sun gear 150. A desired speed increase rate is obtained by adjusting the rotational speed of the first ring gear 140, such that the most comfortable riding state is selected.

There are two types of power transmission routes of the continuously variable transmission for a bicycle.
1) In a rider power transmission route, the rider presses the pedals to operate and rotate the central shaft 110, the power (the first clutch 180) is transmitted to the torque sensor 115 through the first latch gear 181 at the second central shaft 113 side of the central shaft 110 and the first latch 183 at the torque sensor 115 side, and the power is further transmitted to the first carrier 120.
2) In a motor power transmission route, the power of the motor is transmitted to the motor output shaft 410 and the motor output gear 420 through the third clutch 470, and the power is further transmitted to the motor input gear 121 and the first carrier 120 through the transition gear 430.
3) The power of the rider and the power of the motor are merged on the first carrier 120, and both the power of the rider and the power of the motor are outputted by means of the gear shifting, such that the rider may ride with the most comfortable pedaling force and the most comfortable cadence, and the motor may also rotate in the high-efficiency range.

In particular, the first carrier 120 operates the first planet gears 130, and the first planet gears 130 simultaneously engage with the first ring gear 140 and the first sun gear 150. As described above, the rotational speed of the first sun gear 150 is determined in common by the rotational speed of the first carrier 120 and the rotational speed of the first ring gear 140. Specifically, first sun gear rotational speed n first sun gear = (1 + Zf/Zg) * n first carrier - Zf/Zg * n first ring gear.
Zf represents the number of teeth of the first ring gear 140, and Zg represents the number of teeth of the first sun gear 150.

Next, relationships between the specific riding situation, the load of the load providing part 200, and the gear shifting structure of the first planet gears 130 will be described in detail.
1) When the rider starts from the stopped state, the rotational speed of the output shaft 160 and the rotational speed of the first sun gear 150 are 0, and the load is high. The first carrier 120 operates the first planet gears, and the first planet gears 130 rotate the first ring gear 140. When the speed of the first ring gear 140 becomes higher than the speed of the first carrier 120, the second latch gear 271 engages the second latch 273 at the support frame 260 side, and the first ring gear 140 and the first carrier 120 rotate at the same speed. In this case, the speed increase rate of the output shaft 160 is lowest, a speed ratio between the central shaft 110 and the output shaft 160 is 1 : 1, i.e., the speed increase rate is i = 1, and the operation is performed as the low-speed gear.

At the same time, the first ring gear 140 operates and rotates the second ring gear 210. Therefore, the second planet gears 221, the third planet gears 223, and the second sun gear 240 are operated and rotated, and the second sun gear 240 is fixedly connected to the generator rotor 250 and operates the generator rotor 250. In this case, the charging load of the electric generator is 0, and the generator rotor 250 is in the idling state.

2) When the riding is performed on a downward slope or a flat ground with fair wind, the bicycle riding resistance force is low. The output shaft 160 requires low torque and a high rotational speed. In this case, the charging load of the load providing part 200 is increased, the rotational speed of the generator rotor 250 is decreased, and the generator rotor 250 is finally stopped, such that the speed of the second ring gear 210 also becomes 0. In this case, the speed increase rate is highest, and a speed ratio between the central shaft 110 and the output shaft 160 is i = 1 + Zf/Zg = 1 + 102/30 = 4.4. Here, Zf represents the number of teeth of the first ring gear 140 that is 102 in the present embodiment. Zg represents the number of teeth of the first sun gear 150 that is 30 in the present embodiment. That is, the speed increase rate of the output shaft 160 is i = 4.4, and the traveling is performed with the high-speed gear. The rider rides at a high speed with a low cadence.

3) When the riding is performed under the road condition between the two situations, the charging load of the load providing part 200 is controlled so that the rotational speed of the first ring gear 140 is within a range higher than 0 and lower than the rotational speed of the central shaft 110. The rotational speed increase rate of the output shaft 160 is also adjusted to a value of 1 to 4.4 for comfortable riding. The most comfortable speed increase rate is provided to the rider.

## Claims

1. A continuously variable transmission for a bicycle, the continuously variable transmission comprising:
a shifting part (100) configured to transmit a rotational force of a central shaft (110) to an output shaft (160) while automatically shifting gears in accordance with resistance when rotating by receiving the rotational force of the central shaft (110) through a first carrier (120), first planet gears (130), a first ring gear (140), a first sun gear (150), and the output shaft (160) when a user operates and rotates the central shaft (110); and
a load providing part (200) installed to operate in conjunction with the shifting part (100) and configured to selectively provide a load to the shifting part (100), **characterized in that** the load providing part (200) rotates by receiving a rotational force of a second ring gear (210), which rotates integrally with the first ring gear (140), sequentially through dual planet gears 220), a third ring gear (230), a second sun gear 240), and a generator rotor (250) and provides a load in the reverse order.

2. The continuously variable transmission of claim 1, wherein a support frame (260) is installed integrally with the first ring gear (140), and the support frame (260) operates in one direction in conjunction with the first carrier (120) through a second clutch (270).

3. The continuously variable transmission of claim 2, wherein the second clutch (270) has a second latch gear (271) installed on the first carrier (120), and a second latch (273) rotatably installed on an inner surface of the support frame (260) is selectively caught by the second latch gear (271) to selectively rotate the first carrier (120).

4. The continuously variable transmission of claim 1, wherein the dual planet gears (220) include a second planet gear (221) and a third planet gear (223) installed on a single shaft, the second planet gear (221) engages with an inner portion of the second ring gear (210), and the third planet gear (223) engages with an inner portion of the third ring gear (230) and an outer portion of the second sun gear (240).

5. The continuously variable transmission of claim 1, wherein the second sun gear (240) engages with an outer portion of the generator rotor (250).

6. The continuously variable transmission of claim 1, further comprising:
a motor part (400) installed to operate in conjunction with the shifting part (100) and configured to provide power to the shifting part (100).

## Patentansprüche

1. Stufenlos abänderbares Getriebe für ein Fahrrad, wobei das stufenlose Getriebe umfasst:
ein Schaltteil (100), das so konfiguriert ist, dass es eine Drehkraft einer zentralen Welle (110) auf eine Abtriebswelle (160) überträgt, während es beim Drehen entsprechend dem Widerstand automatisch schaltet, indem es die Drehkraft der zentralen Welle (110) über einen ersten Träger (120), erste Planetenräder (130), ein erstes Hohlrad (140), ein erstes Sonnenrad (150) und die Abtriebswelle (160) aufnimmt, wenn ein Benutzer die Zentralwelle (110) betätigt und dreht; und
ein Lastzuführungsteil (200), das so installiert ist, dass es in Verbindung mit dem Schaltteil (100) arbeitet, und das so konfiguriert ist, dass es dem Schaltteil (100) selektiv eine Last zuführt, **dadurch gekennzeichnet, dass** sich das Lastzuführungsteil (200) dreht, indem es eine Drehkraft eines zweiten Hohlrads (210) aufnimmt, das sich integral mit dem ersten Hohlrad (140) dreht, nacheinander über doppelte Planetenräder (220), ein drittes Hohlrad (230), ein zweites Sonnenrad (240) und einen Generatorrotor (250) dreht und eine Last in umgekehrter Reihenfolge bereitstellt.

2. Das stufenlos abänderbare Getriebe nach Anspruch 1, wobei ein Stützrahmen (260) einstückig mit dem ersten Hohlrad (140) angebracht ist und der Stützrahmen (260) in einer Richtung in Verbindung mit dem ersten Träger (120) über eine zweite Kupplung (270) wirkt.

3. Das stufenlos abänderbare Getriebe nach Anspruch 2, wobei die zweite Kupplung (270) ein zweites Rastzahnrad (271) aufweist, das auf dem ersten Träger (120) angebracht ist, und wobei ein zweites Rastzahnrad (273), das drehbar an einer Innenfläche des Stützrahmens (260) angebracht ist, selektiv mit dem zweiten Rastzahnrad (271) in Eingriff gebracht wird, um den ersten Träger (120) selektiv zu drehen.

4. Das stufenlos abänderbare Getriebe nach Anspruch 1, wobei die doppelten Planetenräder (220) ein zweites Planetenrad (221) und ein drittes Planetenrad (223) umfassen, die auf einer einzigen Welle angebracht sind, wobei das zweite Planetenrad (221) mit einem inneren Abschnitt des zweiten Hohlrads (210) in Eingriff steht und das dritte Planetenrad (223) mit einem inneren Abschnitt des dritten Hohlrads (230) und einem äußeren Abschnitt des zweiten Sonnenrads (240) in Eingriff steht.

5. Das stufenlos abänderbare Getriebe nach Anspruch 1, wobei das zweite Sonnenrad (240) mit einem äußeren Abschnitt des Generatorrotors (250) in Eingriff steht.

6. Das stufenlos abänderbare Getriebe nach Anspruch 1, das ferner umfasst: einen Motorteil (400), der so installiert ist, dass er in Verbindung mit dem Schaltteil (100) arbeitet, und der so konfiguriert ist, dass er den Schaltteil (100) mit Leistung versorgt.

## Revendications

1. Transmission à variation continue pour bicycle, ladite transmission à variation continue comprenant :
une partie de commutation (100) configurée pour transmettre une force de rotation d'un arbre central (110) à un arbre de sortie (160) tout en changeant automatiquement de vitesse en fonction de la résistance lors de la rotation, en recevant la force de rotation de l'arbre central (110) par l'intermédiaire d'un premier support (120), de premiers pignons satellites (130), d'une première couronne dentée (140), d'un premier pignon solaire (150) et de l'arbre de sortie (160) lorsqu'un utilisateur actionne et fait tourner l'arbre central (110) ; et
une partie de fourniture de charge (200) installée pour fonctionner conjointement avec la partie de commutation (100) et configurée pour fournir de manière sélective une charge à la partie de commutation (100), **caractérisée en ce que** la partie de fourniture de charge (200) tourne en recevant une force de rotation d'une deuxième couronne dentée (210), qui tourne solidairement avec la première couronne dentée (140), successivement par l'intermédiaire de deux pignons satellites (220), d'une troisième couronne dentée (230), d'un deuxième pignon solaire (240) et d'un rotor de générateur (250), et fournit une charge dans l'ordre inverse.

2. Transmission à variation continue selon la revendication 1, dans laquelle un châssis de support (260) est installé solidairement avec la première couronne dentée (140), et le châssis de support (260) fonctionne dans un sens conjointement avec le premier support (120) par l'intermédiaire d'un deuxième embrayage (270).

3. Transmission à variation continue selon la revendication 2, dans laquelle le deuxième embrayage (270) comporte un deuxième pignon d'enclenchement (271) monté sur le premier support (120), et un deuxième cliquet (273), monté de manière rotative sur une surface intérieure du châssis de support (260), est sélectivement enclenché par le deuxième pignon d'enclenchement (271) afin de faire tourner sélectivement le premier support (120).

4. Transmission à variation continue selon la revendication 1, dans laquelle les deux pignons satellites (220) comprennent un deuxième pignon satellite (221) et un troisième pignon satellite (223) montés sur un seul arbre, le deuxième pignon satellite (221) s'engrène avec une partie intérieure de la deuxième couronne dentée (210), et le troisième pignon satellite (223) s'engrène avec une partie intérieure de la troisième couronne dentée (230) et une partie extérieure du deuxième pignon solaire (240).

5. Transmission à variation continue selon la revendication 1, dans laquelle le deuxième pignon solaire (240) s'engrène avec une partie extérieure du rotor du générateur (250).

6. Transmission à variation continue selon la revendication 1, comprenant en outre :
une partie moteur (400) installée pour fonctionner conjointement avec la partie de commutation (100) et configurée pour fournir de l'énergie à la partie de commutation (100).
